# EUROPEAN PATENT APPLICATION

(11) **EP 4 592 659 A1**
(43) Date of publication of application: **30.07.2025**
(21) Application number: 24154549.0
(22) Date of filing: 29.01.2024
(51) Int. Cl.: G01M 3/00, G01K 1/143, G01K 17/00

(54) **DEVICE FOR ASSESSING THE CONDITION OF AN INSULATION**

(71) Applicant: Torres González, Alejandro, 8280 Fürstenfeld (AT)
(72) Inventor: Torres González, Alejandro, 8280 Fürstenfeld (AT)
(74) Representative: Wirnsberger & Lerchbaum Patentanwälte OG

(57) **Abstract**

The invention relates to a device for assessing the condition of an insulation (2). According to the invention a plurality of temperature sensors (7) are arranged along a line on a flexible circuit board (8), which flexible circuit board (8) is connected to a metal strip (5), whereby a connecting means, in particular a double-sided adhesive tape (6), is provided on each side of the line, wherein a controller (14) is provided with which data recorded by the sensors (7) can be transmitted to a data processing device.

Furthermore, the invention relates to a Method for assessing the condition of an insulation (2).

## Description

The invention relates to a device for assessing the condition of an insulation.

Furthermore, the invention relates to a method for assessing the condition of an insulation.

Thermal insulation in industrial facilities is subject to premature aging and degradation influenced by various factors including the thermal operation of pipes, the specific type of industry, prevailing weather conditions, insulation installation techniques, and the specifications of the insulation system itself. These factors contribute to impossible to predict deterioration of insulation effectiveness over time, leading to increased energy consumption, higher operational costs, and elevated greenhouse gas emissions.

Current practices involving standardized laboratory tests or specific location field testing do not adequately account for large-scale, long-term insulation performance or different climate conditions. This limitation results in a data deficit that impedes the optimization of thermal insulation and its components. Testing often concentrates on the insulation material's performance rather than on the overall thermal insulation system in different environmental conditions. This narrow focus overlooks the potential for enhancing the entire system's efficiency and lifespan through the combination of various materials.

Thermal insulation system is the combination of different material to achieve an specific objective mainly focus on thermal efficiency. Currently, there is no widespread practice for certifying or testing the performance of thermal insulation systems under diverse conditions. This lack of thorough evaluation means that the true efficiency of insulation systems in different operational environments remains largely unknown. As a result, industries are often unaware of the actual performance of their insulation systems, especially as they age or under different environmental and operational conditions.

The methods known from the state of the art to identify losses in thermal insulation have remained largely unchanged for the past 40 years. These traditional practices do not adequately account for modern operational demands or environmental challenges. This reliance on outdated methods hinders the ability to accurately assess thermal insulation efficiency and identify areas for improvement, leading to continued energy inefficiencies.

Not even the existence of the financial attractiveness and environmental benefits of improved thermal insulation, the industry has not attended into its potential for energy savings and emissions reduction. This gap is critical in the journey towards global carbon neutrality. Many industries rely on insulation systems that are not energy-efficient under current market conditions. Outdated technical insulation specifications, primarily focused on process and safety requirements, are still prevalent, leading to excessive heat losses and increased levels of avoidable greenhouse gas emissions.

The industry faces several obstacles, including lack of comprehensive data, null of thermal insulation systems expertise, and divided responsibilities between energy management and Insulation replacement budgets. These factors hinder the adoption of more energy-efficient insulation systems solutions.

There is a pressing need for innovative solutions that can continuously monitor and evaluate the performance of insulation systems in real-time, across various climate conditions. Such solutions would enable a more precise understanding of insulation systems effectiveness and its impact on energy consumption and emissions.

This is where the invention comes in. It is an object of the invention to provide a device named at the outset, with which an assessment can be made in a particularly precise manner. In addition, the device should be particularly robust.

Furthermore, a method of the type mentioned at the beginning is to be specified, which is suitable for the particularly accurate in-situ assessment of the condition of an insulation.

According to the invention the first object is attained in that a plurality of temperature sensors are arranged along a line on a flexible circuit board, which flexible circuit board is connected to a metal strip, whereby a connecting means, in particular a double-sided adhesive tape 6, is provided on each side of the line, wherein a controller is provided with which data recorded by the sensors can be transmitted to a data processing device.

The sensors can therefore be attached to insulation, for example to insulation attached to a pipe, using the metal strip. A metal cover that is usually fitted around the insulation can be removed for this purpose and the insulation and sensors are still protected by the metal strip. Due to the large number of sensors, a temperature profile can be determined and transmitted to a central computer unit or the like, in which the temperature profile can be used to draw conclusions about a condition. For example, insulation that is soaked through on the floor side can be recognised by the fact that temperatures on the outside of the insulation in a lower area differ from temperatures measured in an area further up. Accordingly, a deteriorated condition can be recognised. Furthermore, an increasing temperature on the insulation over the entire circumference of a pipe with constant process parameters can indicate a degradation of the insulation, which can also be detected with the device according to the invention.

Since the sensors are arranged along a line on the metal strip, the device can easily be manufactured on site adapted to local conditions by simply cutting from a roll of corresponding metal strip, which has sensors along a line, the length required to assess the insulation, i.e. a length of the strip is cut which corresponds to a circumference of the insulation.

The invention is preferably embodied as a thermal monitoring band, usually presented in large rolls, specifically crafted for precise flow energy measurement over the surface of thermal insulation in industrial applications. The band is distinguished by a multilayer compound for a continuous thermal sensor-laden strip (Flexible Circuit Board) that can be cut transversely at several specific points without affecting the electronic system.

Preferably, one or more humidity sensors are provided on the metal strip. Moisture can then also be used to assess the condition of the insulation. The condition of the insulation of industrial pipework usually deteriorates due to the ingress of moisture. Sensors for moisture can be provided parallel to the temperature sensors on the metal strip, for example also along a line. Thus, a variant of this thermal sensor-laden strip is adding humidity sensors to detect moisture due to condensation in low temperatures insulation applications.

It is favourable when an internal insulation layer of aerogel polyamide or silicone is provided between the flexible circuit board and the metal strip.

Moreover, it is favourable, when an internal insulation layer of aerogel polyamide or silicone is provided on the flexible circuit board.

By Integrating layers of aerogel polyamide or Silicone to encapsulate the Flexible Circuit Board (FCB) of the thermal sensor-laden strip has several significant advantages as:
Protection Against Environmental Influences:
Aerogel and Silicone has excellent thermal insulation properties, meaning it can protect the FCB sensors from ambient temperature fluctuations, ensuring that the readings accurately reflect the insulation temperature, not the environment.

Improved Thermal Stability:
Polyamide provides thermal stability to the sensors, which is crucial when measuring temperatures in industrial processes that can vary widely and be extremely high or low.

Chemical and Physical Resistance:
The layers of aerogel and silicone are resistant to chemicals and physical wear, which is beneficial in harsh industrial environments where solvents, fuels, and other corrosive materials can be found.

Lightweight and Flexibility:
The layers are very light while also being robust. Its integration does not add significant weight to the system, maintaining the flexibility of the FCB, which is important for installation on thermal insulation of pipes and equipment.

Reduction in Insulation Thickness:
The high efficiency of the layers can allow for a thinner overall design, reducing the volume and material needed for the monitoring system.

Protection Against Moisture:
Aerogel and Silicone are hydrophobic, meaning it can protect the FCB from the effects of moisture, such as corrosion or ice formation, which could affect the measurement and
integrity of the sensor-laden strip.

Wide Operating Range:
The layers of aerogel polyamide and silicone can operate effectively over a wide range of temperatures, making them suitable for various industrial applications.

Ease of Assembly:
The layers of aerogel and silicone can be adhered with the use of polyurethanebased Industrial Adhesives that facilitates simple and robust assembly with other materials to provide extra mechanical protection.

Thus, the sensor is usually enclosure with highly efficient thermal insulation materials, such as polyamide of aerogel or silicone for High temperature applications, which play a role in ensuring the accuracy of temperature readings by minimizing external thermal interference.

By combining these advantages, the device according to the invention can offer a highly effective, durable, and accurate temperature monitoring solution for thermal insulation in a variety of industrial applications.

It is advantageous if an external insulation layer of aerogel polyamide or silicone is provided on the flexible circuit board, which external insulation layer completely covers the flexible circuit board, with only cut-outs for the sensors.

Preferably, the controller comprises a gyroscopic sensor, whereby the device is configured to determine the positions of the individual sensors when the device is arranged on an insulation, for example around a pipeline. The controller is thus usually integrated with digital gyroscopic technology or digital compass, is designed to identify its exact location relative to the installed sensor strip. This enables the accurately mapping of the position of each sensor on the insulation's circumference.

Usually, the gyroscopic sensor is provided in the controller. The metal strips that enclose the insulation are thus cut to the required length. A controller is then added to install the device on the insulation of a pipe, which connects electronically to the individual sensors of the metal strip and is designed to establish a connection with a central computer unit. The position of each individual sensor can thus be determined via the controller. The controller can also be designed with a compass and/or a GPS sensor so that the position of each individual sensor can be determined precisely via remote via the controller in order to be able to easily determine from the central data processing system at which points there is damage to the insulation.

Thus, it is preferred that the controller is detachably connected to the metal strip. A data connection between the controller and the individual sensors can be established via the metal band or wirelessly. For example, the individual sensors could be arranged on circuit boards from which data is transmitted wirelessly to the controller. However, it is also possible for the sensors to be supplied with energy by the controller, whereby the controller can have solar panels and an accumulator, for example, to supply energy.

Preferably, the controller comprises a compass. This makes it easy to determine the orientation of the controller and therefore of the sensor band.

It is preferable, if the controller comprises a GPS to trace the track of the pipeline.

It is advantageous, if a photovoltaic module and a batterie are provided, in particular connected to the controller.

In order to reduce thermal losses in industrial used pipelines, it is preferable if a at a pipeline with a device for assessing the condition of the pipeline, the device is embodied according to the invention. This makes it easy to remotely detect damage to the insulation at an early stage in order to prevent energy loss. For example, pipelines in power plants, the paper industry or the chemical industry can be designed with such devices.

Preferably, the device is attached to the insulation in such a way that a strip running along the circumference with a width corresponding to at least one width of the sensors is cut out of a metal cover of the insulation, so that the insulation is exposed over an entire circumference. The device is then arranged over this exposed part of the insulation, with the sensors coming into contact with the insulation as far as possible. The device can be fixed to the insulation using the adhesive tapes on both sides of the metal strip, so that the metal strip can be glued to the cover of the insulation on both sides of the cut-out strip. Accordingly, the insulation is now protected by the device or the metal strip of the device in the area where the cover has been removed.

Usually, devices are provided at different length positions of the pipeline, in particular, which devices are connected by wireless connections between the controllers.

It is preferable if a distance between the devices along a longitudinal direction of the pipe is 10 metres to 100 metres, in particular 33 metres.

The second object is attained in a method of the kind mentioned at the outset in that a temperature at the insulation is measured at several positions, wherein in particular a device according to the invention is used, and based on measured temperatures, in particular changes in temperatures or temperature distributions, a conclusion is drawn about the condition of the insulation. The condition of the insulation is therefore assessed on the basis of the measured temperatures, measured temperature profiles or changes in the measured temperatures.

It is preferably, if humidity is measured at several positions on the insulation, whereby the measured humidity or changes in humidity are used to assess the condition of the insulation.

The device according to the invention can be attached in a wide variety of ways. It is particularly favourable if the device is attached according to a method, wherein a circumference of the insulation surrounding the pipeline is determined, after which a metal strip comprising a flexible circuit board with a plurality of sensors arranged along a line is cut off so that a length of the metal strip and the flexible circuit board corresponds to the circumference, after which a cover of the insulation is removed if necessary and the metal strip is arranged directly on the insulation and fastened with the connection means, after which the controller is coupled to the flexible circuit board.

The method allows on-site customization, the continuous device design and the arrangement of its materials allows the device to be cut into specific lengths, making it adaptable to various Insulation circumferences and insulation shapes,this feature helps achieve a practical and scalable solution.

Additional features, benefits and effect of the invention follow from the exemplary embodiment described below.

The drawings which are thereby referenced show the following:
Fig. 1 a pipeline equipped with an insulation;
Fig. 2 a cross-section through a metal strip with a sensor;
Fig. 3 a side view of a metal strip with sensors;
Fig. 4 another view of a metal strip with sensors;
Fig. 5 an insulation equipped with a device according to the invention;
Fig. 6 a pipeline with several devices;
Fig. 7a to 7c different states during the assembly of a device;
Fig. 8 data connections when a method according to the invention is carried out.

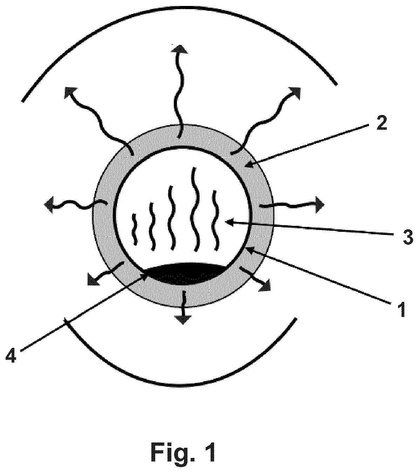

Fig. 1 shows a pipeline 1 with an insulation 2. As shown, the pipeline 1 can contain vapor 3 and condensate 4 on the floor side. Heat leaves the pipe via the insulation 2. If the insulation 2 is damaged, for example by condensate 4 forming in the insulation 2, this reduces the insulation 2 value and the insulation 2 is damaged. Such damage is to be detected by a device according to the invention.

This drawing represents the typical behaviour of the energy flow in cylindrical equipment and pipes in a vertical position, in this case, the temperature flow is greater in the upper part due to the behaviour of natural convection around the pipe, causing hot air to rise and be replaced by colder air. Therefore, it is important to have a thermal mapping of the circumference of the insulation 2 to determine possible causes of energy deficiencies.

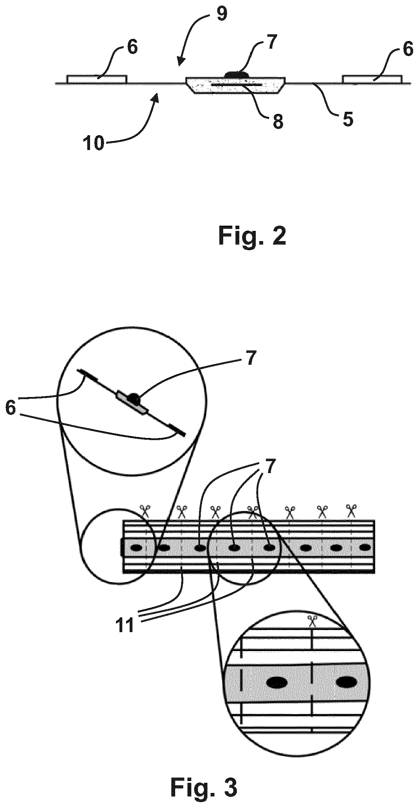

Fig. 2 shows a sectional view of a metal strip 5 equipped with sensors 7, a so-called energy monitoring band, which can be used to manufacture devices according to the invention. A metal strip 5 is provided on which digital thermal sensors 7 are arranged. The sensors 7 are connected to the metal strip 5 via one or more flexible circuit boards 8 (FCB). The metal strip 5 also has double-sided adhesive tapes 6 with which the metal strip 5 can be attached to a pipeline 1 or insulation 2.

The strip has an Insulation's inside layer face 9, with which the tape 6 is applied to the insulation 2, and an Insulation's Outside layer face 10, which is visible from the outside when the strip is applied to the insulation 2.

The FCB can be made from acrylic-based laminates made with polyimide film, this material is suitable for high temperature applications, the FCB will have sufficient width (approximately 20 mm) to house the 3-track copper printed circuit that They will run in parallel, to provide the power bus (VDD), ground (GND) and data signal (DQ), the tracks must have connection "pads" for each sensor. To guarantee the integrity of the signal (noise reduction and signal attenuation), each connected sensor will have a 4.7K OHM SMD Pull-up resistor, this resistor will be connected between the power track (VDD) and the signal. data (DQ). The sensors considered will be small digital sensors as DS18B20 type. Each sensor must be accessible to solder the three connections (VDD, GND and DQ). The location of the temperature sensors will be longitudinal at regular intervals of 6.3 cm or 3.1416 inches, these distances are due to a proportional increase in the length of the circumferences for every 1 centimeter or 1/2 inch added to the thickness of the insulation (typical increases in thickness on commercial thermal insulation), The DS18B20 is a digital temperature sensor which uses the 1-Wire protocol to communicate, this protocol needs only one data pin to communicate and allows connecting more than one sensor on the same bus. With this sensor we can measure temperature from -55°C to 125°C and with a programmable resolution from 9 bits to 12 bits. Each sensor has a unique 64-bit address established at the factory. This address is used to identify the device with which it is communicating, since more than one device can exist on a 1-wire bus.

Fig. 3 shows the metal strip 5 with sensors 7 in side view. As can be seen, the metal strip 5 between the sensors 7 always has areas, visual cutting lines where the metal strip 5 can be cut off in order to produce devices that are adapted to specific dimensions.

The visual cutting lines are arranged every 6.3 cm or 3.1416 inches.

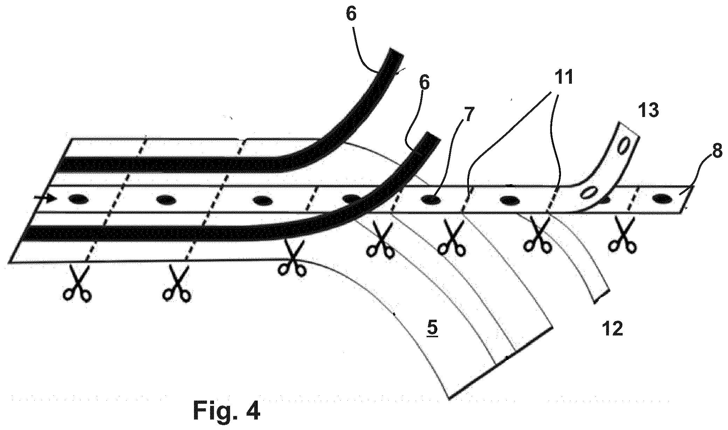

Fig. 4 shows a further example of such a strip. Here, the sensors 7 are encapsulated between an internal insulation layer 12 and an external insulation layer 13. The internal insulation layer 12 and the external insulation layer 13 are usually embodied as aerogel polyamide or Silicone. As can be seen the integration of the sensor-laden strip within a continuous metal band, serves as robust mechanical protection. This metal band or metal strip 5 is usually outfitted with industrial-grade, high-temperature-resistant double-faced adhesive tape 6, facilitating secure and straightforward application to a variety of insulated surfaces, both curved and flat. The continuous production method of this thermal monitoring system represents a leap in logistical efficiency and cost-effectiveness. It offers an affordable and easily implementable solution for industrial applications, ensuring broad accessibility and practicality in diverse operational settings. The sensors 7 can be embodied as temperature or humidity sensors 7 in order to measure a temperature and moisture distribution within the insulation 2.

The FCB with the temperature sensors, is according to Fig. 4 encapsulated between two thin layers of 2 mm thickness of aerogel polyamide or silicone, these materials have exceptional thermal insulation properties and are highly efficient, these conditions are suitable for thin layers of these materials to provide adequate protection to mitigate the influences of external temperature and guarantee that the readings are focus on the surface of the thermal insulation, long strips of the insulation material will have a width of approximately 4 centimeters and will be joined along each of their sides with adhesives based on silicone, polyurethane or cyanoacrylate.

The Sensor-laden strip with the environmental isolation layers can be adhered, with adhesives based on silicone, polyurethane or cyanoacrylate, to a continuous metal band that can be made of aluminum or stainless steel for example, this metal band can provide robust mechanical protection. In turn, the metal band is equipped along its entire length and on each of its sides with a double-sided adhesive tape 6 for industrial applications and resistant to high temperatures, the tape 6 will have a width of at least one inch wide, these tapes 6 will provide easy and secure fixation on metal surfaces commonly used as thermal insulation finishes.

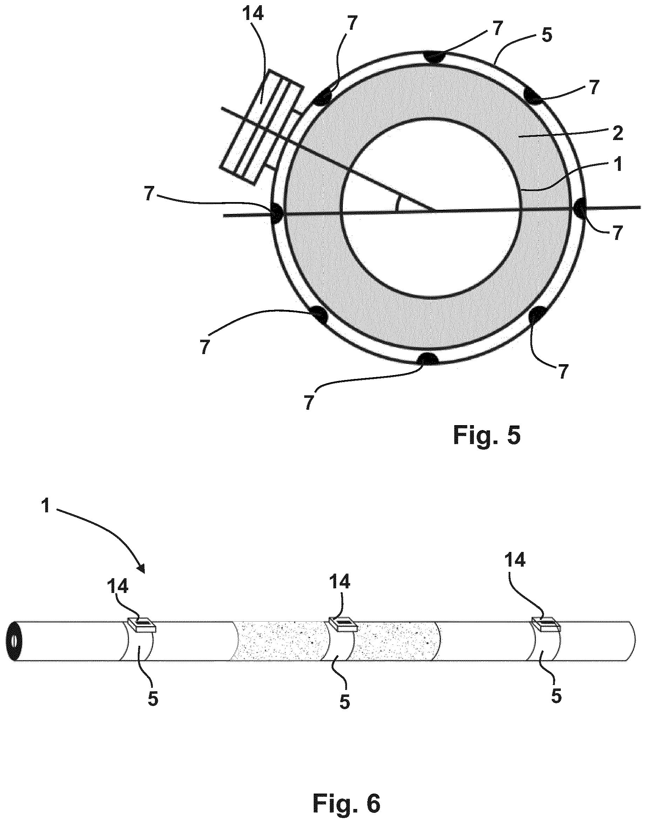

Fig. 5 shows an insulation 2 equipped with a device according to the invention. The device contains a metal strip 5 as shown in Figs. 2 to 4 or a section cut from it at a visual cutting line and a controller 14 connected to the metal strip 5. The controller 14 can establish a data connection to the individual sensors 7, for example via the metal strip 5 or wirelessly. In addition, the controller 14 is suitable for establishing a data connection with a central data processing facility, in particular in a cloud, where the data is analysed. Furthermore, the controller 14 has a gyroscope sensor 7 and a compass so that the position of the controller 14 and thus also the position of the individual sensors 7 can be easily determined, for example to detect damage due to condensation water collected on the ground.

Thus, the band is usually directly connected to a sophisticated controller, integrated with a gyroscope or digital compass, to determine the precise location of each temperature sensor along the band or strip. This functionality allows analyzing the flow of thermal energy through the insulation surface, this precise arrangement ensures thorough coverage and detailed thermal profiling of the insulation surface, allowing algorithms to identify potential areas of heat loss or gain, determine potential failures, and evaluate the overall energy efficiency of the insulation. In addition to the above, the controller is provided with wireless data transmitter such as Zigbee, LoRa, LTE or 5G mobile network. The controller is equipped with an autonomous power supply module, using a hybrid system of solar energy and rechargeable batteries. This feature ensures uninterrupted operation and eliminates the need for external power supplies, thus enhancing its suitability for various industrial environments. Another feature included in the controller is a GPS module that will allow the sensor to be located in large industrial facilities.

Thus, the controller is usually embodied as a controller for loT applications that will be configured according to the necessary requirements to adapt to different scenarios, the monitoring band and this controller will have a quick-action connector that will consist of a plastic casing in the shape of the transverse profile of the monitoring band, metal clips in the casing connector will fit the copper tracks of the sensor strip, in this case there will be three clips so that each one has access to the VDD, GND and DQ lines.

The controller can be provided with multiple tools, including:
- Digital gyroscope module, for pipes in a horizontal position, this gyroscope will precisely determine the location of the controller and in turn the location of each sensor on the circumference of the insulation surface, thus having one of the benefits of the system of being able to know which of the sensors is monitoring a specific point on the surface of the thermal insulation.
- Digital compass module, for pipes in a vertical position, like the gyroscope, this tool will precisely determine the location of each sensor on the circumference of the thermal insulation surface, improving the accuracy of data collection.
- LoRa module is a long-range wireless communication protocol designed for the Internet of Things (IoT). It is known for its ability to transmit small amounts of data over long distances using very little power. It can cover distances of up to 15 km in rural areas and 2-5 km in urban environments, depending on the environment and configuration. Ideal for battery powered devices thanks to its energy efficiency. It operates in ISM (Industrial, Scientific and Medical) frequency bands, which do not require a license.
- ZigBee module is a wireless communication protocol designed for loT applications that require secure, reliable, and low-power communications. Short to Medium Range Generally, ZigBee has a range of 10-100 meters, depending on obstacles and transmission power. This data transmission protocol has the ability to create self-organizing and robust mesh networks, where devices can communicate with each other and transmit messages over the network. It is suitable for battery-powered devices such as sensors and smart control devices

Depending on the installation conditions, the controller is equipped with different tools such as orientation module, data transmission modules, GPS module, power module, data collector and data processor.

The controller can be equipped with a power module that runs on solar panels and rechargeable batteries designed for loT applications. The parameters used to estimate consumption were considering the implementation of the system in a thermally insulated pipe of 510 mm total diameter (20" total diameter) and an estimated operating time of 5 minutes for every 3 hours, considering 24 hours. of the day, we would have 8 readings per day and a real working time of 40 minutes per day (8 readings x 5 minutes of operation). The metal band, which can be called sensor band, around the circumference of pipe thermal insulation is preferably strategically deployed every 33.33 meters of lineal pipe (3 band every 100 pipe lineal meter). Additionally, the combination of band sensor deployed strategically, and the development and integration of sophisticated algorithms and machine learning techniques can provide intuitive information in order to estimate the energy flow in between, as a virtual mesh, in other words every sensor band will estimate 16.66 lineal meter each side of it. Of course, other distances are possible. This virtual mesh represents a leap in energy monitoring technology. The resultant virtual mesh can generate a highly detailed and dynamic map of thermal flow across the insulation's surface, providing invaluable insights into the thermal insulation system performance and energy efficiency. A pipeline equipped with several devices is shown in Fig. 6. As shown, a metal strip and a controller are provided on each device to measure temperatures on the insulation and transmit them to a central data processing unit.

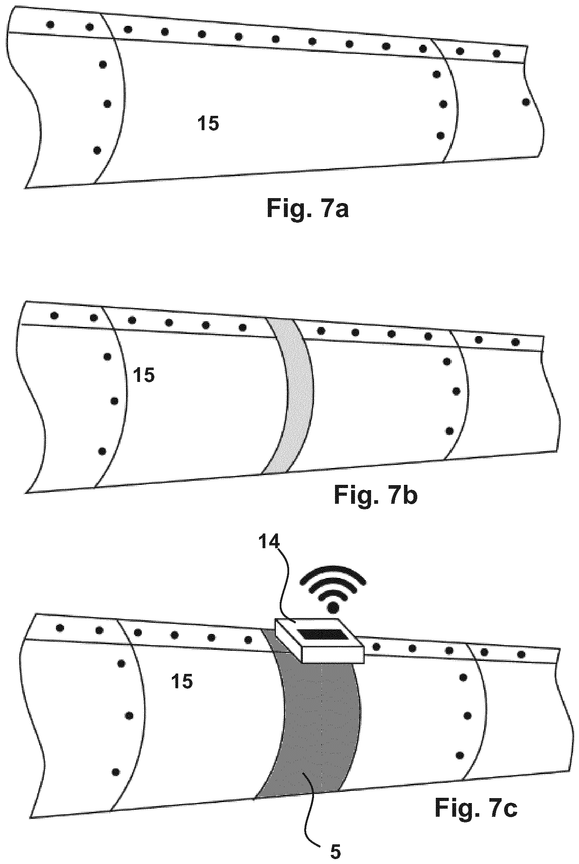

Fig. 7a to 7c different states during the assembly of a device according to the invention on an insulation. Fig. 7a shows the insulation with a cover before the device is attached. The device is then attached as follows:

### • Adjustment:

The installer measures the circumference of the thermal insulation where the band is to be installed. Using this measurement, the sensor-laden strip, the metal strip, integrated with the continuous metal band, is cut to the required length at a visual cutting line.

This step ensures a custom fit for each application, customizing various sizes and shapes of industrial insulation.

### • Installation:

The installer transversely cuts a section of for example 6 cm wide on the metal cover of the insulation. Prior to attaching the band, the installer should clean the metal surface of the insulation with isopropyl alcohol. This step ensures that the surface is free of contaminants, which enhances the adhesive bond. Then the installer peels off the protective layer from the double-faced adhesive tape 6 on the metal band and adheres it securely to the metal finish surface of the insulation, the cover of the insulation. This step ensures a stable and durable installation, with the high temperature-resistant adhesive tape providing a strong bond suitable for industrial environments.

### • Coupling:

One end of the metal band is usually be prepared to seamlessly connect with the fast controller connector. This connector is equipped with metal clips to engage directly with the VDD, DQ, and GND bus of the sensor-laden strip. This feature allows for a quick and secure connection between the strip and the controller, simplifying the installation process.

### • Connection:

After the strip is coupled with the controller, the next step involves establishing communication with the monitoring system. This is accomplished through a user-friendly mobile app, which facilitates the connection with the communication protocol. A mobile app provides an intuitive platform for users to manage and monitor the system, enhancing the usability of the technology.

### • Verification:

The mobile app assists in connecting the controller with the network gateways. The data from the sensors is usually being uploaded to the cloud and is accessible on a service platform. This verification ensures that the system is functioning correctly, and that the data collected is reliable and available for analysis.

### • Data Analysis and Reporting:

The collected data is analyzed using advanced algorithms and machine learning development, the results are reported through the app or service platform. This provides insights into the thermal performance of the insulation, Energy efficiency forecasting and assists in decision-making for energy management and maintenance.

### • Reconfiguration and Reusability:

The system is designed for reconfiguration and reuse. In cases of insulation replacement or different area should be monitored, both the controller and the power source module can be detached and reused. This feature significantly enhances the system's adaptability and reduces waste, aligning with sustainable usage practices. the band also can be detached, resized, and reinstalled as needed, adding to the system's versatility.

### • Maintenance and Troubleshooting:

The mobile app will provide diagnostics and alerts for maintenance needs and possible troubleshooting, that way, focus maintenance checks be performed to ensure the strip and its components are functioning optimally.

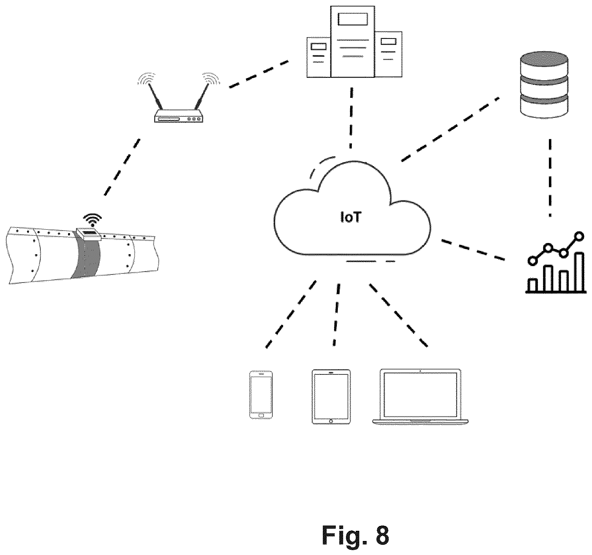

Fig. 8 shows data connections when a method according to the invention is carried out. As can be seen, data is transmitted from the device according to the invention, which can also be called the energy sensor 7 band, to a gateway and from the gateway to a local server. From the local server the data is transmitted in the cloud. The data can then be analyzed on a computer or displayed on mobile devices.

The device captures critical thermal data, which is the foundational layer of the monitoring system. The Gateway sends the collected data to the local server or cloud services, depending on the configuration and network availability. The Local Server provides the first level of data processing and temporary storage. Cloud Services are provided, which offer vast storage capacity and scalable computing resources for extensive data analysis. The Databases stores processed data in structured formats, making it accessible for analysis and reporting. For the purpose of analysis algorithms and machine learning is provided to analyze the stored data, identifying patterns, trends, and potential insulation 2 inefficiencies. Mobile App provide a user-friendly platform for users to access the data and analytics results, offers realtime monitoring capabilities, alerts, and the ability to control and configure the system remotely.

The invention offers the following advantages over the state of the art:

### • Flexibility and Adaptability:

The Sensor Band can be easily cut and adjusted to fit various insulation sizes and shapes, making it significantly more versatile than traditional methods.

### • Advanced Data Processing:

Integration of machine learning algorithms for data analysis enables sophisticated, predictive insights, far surpassing the capabilities of simpler monitoring systems.

### • Ease of Installation:

The band's design simplifies the installation process, requiring minimal effort and technical expertise compared to more complex modular or linear systems.

### • Ease of Maintenance:

Its integrated design and robust construction reduce maintenance requirements, offering a more user-friendly solution over time.

### • Comprehensive Coverage:

Unlike linear or single-point systems, the strip provides complete circumferential coverage, ensuring no gaps in temperature monitoring.

### • Real-Time Monitoring and Analysis:

Continuous data collection allows for real-time monitoring and immediate response to thermal insulation issues; a feature not present in manual inspections or intermittent data collection systems.

### • Cost-Effectiveness and Sustainability:

The reusability of the controller and power source modules, along with the system's durability, contribute to its cost-effectiveness and sustainability over time.

### • Scalability:

The system can be easily scaled up or down, depending on the application, without significant additional costs or technical challenges.

## Claims

1. Device for assessing the condition of an insulation (2), **characterized in that**, a plurality of temperature sensors (7) are arranged along a line on a flexible circuit board (8), which flexible circuit board (8) is connected to a metal strip (5), whereby a connecting means, in particular a double-sided adhesive tape (6), is provided on each side of the line, wherein a controller (14) is provided with which data recorded by the sensors (7) can be transmitted to a data processing device.

2. Device according to claim 1, wherein one or more humidity sensors (7) are provided on the metal strip (5).

3. Device according to claim 1 or 2, wherein an internal insulation layer (12) of aerogel polyamide or silicone is provided between the flexible circuit board (8) and the metal strip (5).

4. Device according to one of claims 1 to 3, wherein an internal insulation layer (12) of aerogel polyamide or silicone is provided on the flexible circuit board (8).

5. Device according to one of claims 1 to 4, wherein an external insulation layer (13) of aerogel polyamide or silicone is provided on the flexible circuit board (8), which external insulation layer (13) completely covers (15) the flexible circuit board (8), with only cut-outs for the sensors (7).

6. Device according to one of claims 1 to 5, wherein the controller (14) comprises a gyroscopic sensor, whereby the device is configured to determine the positions of the individual sensors (7) when the device is arranged on an insulation (2), for example around a pipeline (1).

7. Device according to one of claims 1 to 6, wherein the controller (14) is detachably connected to the metal strip (5).

8. Device according to one of claims 1 to 7, wherein the controller (14) comprises a compass.

9. Device according to one of claims 1 bis 8, wherein the controller (14) comprises a GPS to trace the track of the pipeline (1).

10. Device according to one of claims 1 to 9, wherein a photovoltaic module and a batterie are provided, in particular connected to the controller (14).

11. Pipeline (1) with a device for assessing the condition of an insulation (2) of the pipeline (1), **characterized in that** the device is embodied according to one of claims 1 to 10, whereby the metal strip (5) completely encloses the pipeline (1), wherein preferably a flexible circuit board (8) with internal insulation layer (12) is arranged between the metal strip (5) and the pipeline (1).

12. Pipeline (1) according to claim 11, wherein devices are provided at different length positions of the pipeline (1), in particular, which devices are connected by wireless connections between the controllers (14).

13. Pipeline (1) according to claim 12, wherein a distance between the devices along a longitudinal direction of the pipe is 10 metres to 100 metres.

14. Method for assessing the condition of an insulation (2), **characterized in that** a temperature at the insulation (2) is measured at several positions, wherein in particular a device according to one of claims 1 to 10 is used, and based on measured temperatures, in particular changes in temperatures or temperature distributions, a conclusion is drawn about the condition of the insulation (2).

15. Method according 14, wherein humidity is measured at several positions on the insulation (2), whereby the measured humidity or changes in humidity are used to assess the condition of the insulation (2).

16. Method of attaching a device according to any one of claims 1 to 10 to an insulation (2) of a pipeline (1), wherein a circumference of the insulation (2) surrounding the pipeline (1) is determined, after which a metal strip (5) comprising a flexible circuit board (8) with a plurality of sensors (7) arranged along a line is cut above indicated cutting lines (11) so that a length of the metal strip (5) and the flexible circuit board (8) corresponds to the circumference, after which a cover (15) of the insulation (2) is removed if necessary and the metal strip (5) is arranged directly on the insulation (2) and fastened with the connection means, after which the controller (14) is coupled to the flexible circuit board (8).
